Europäisches Patentamt

European Patent Office

Office européen des brevets

(19)

(11) Publication number: **0 319 587**
A1

## (12) EUROPEAN PATENT APPLICATION

published in accordance with Art. 158(3) EPC

(21) Application number: **88905432.6**

(22) Date of filing: **16.06.88**

Data of the international application taken as a basis:

(86) International application number:
**PCT/JP88/00590**

(87) International publication number:
**WO89/00306 (12.01.89 89/02)**

(51) Int. Cl.³: **G 05 B 19/415**

(30) Priority: **30.06.87 JP 163811/87**

(43) Date of publication of application:
**14.06.89 Bulletin 89/24**

(84) Designated Contracting States:
**DE FR GB**

(71) Applicant: **FANUC LTD.**
**3580, Shibokusa Aza-Komamba Oshino-mura**
**Minamitsuru-gun, Yamanashi 401-05(JP)**

(72) Inventor: **SHIBATA, Tomoatsu**
**1-10-4, Nishioizumi Nerima-ku**
**Tokyo 177(JP)**

(72) Inventor: **OTSUKI, Toshiaki**
**4-10-7, Shinmei Hino-shi**
**Tokyo 191(JP)**

(74) Representative: **Brunner, Michael John et al,**
**GILL JENNINGS & EVERY 53-64 Chancery Lane**
**London WC2A 1HN(GB)**

(54) **SPLINE INTERPOLATION METHOD.**

(57) A spline interpolation method for interpolating a curve in a numerical control apparatus. In this invention a spline curve is represented by a cubic equation. Four points, i.e., two points and two end points or three points and one end point, are given to determine four coefficients of the cubic equation and to effect the interpolation. Since cubic equations are sequentially found for the remaining point sequences and the distance between the present position and the next point is repeatedly interpolated, no particular automatic programming apparatus is required. The interpolation can be effected even when a curve is to be determined by successively receiving the data.

FIG. 2

D E S C R I P T I O N

SPLINE INTERPOLATION METHOD

Technical Field

The present invention relates to a spline interpolation method for interpolating a curve in a numerical control appratus, and more particularly to a spline interpolation method in which a smoothened spline curve is obtained from a small number of points.

Background Art

Machining of a curve which cannot be expressed with an equation with a numerical control apparatus has been carried out in such a manner that the curve is divided into minute curve blocks in advance with an automatic program producing system to produce an instruction tape, and the tape is fed into the numerical control apparatus to perform machining in accordance therewith.

This method is, however, disadvantageous in that a special automatic program producing system is required and the instruction tape is long.

A spline curve is such that in a given sequence of points ($Pn$, $Pn+1$, $Pn+2$, ...), the first order differential and the second order differential at $Pn+1$ coincide with each other between a cubic curve fn(t) connecting Pn and Pn+1 and another cubic curve fn+1(t) connecting Pn+1 and Pn+2.

That is, representing fn(t) and fn+1(t) as follows:

$$fn(t) = An\ t^3 + Bn\ t^2 + Cn\ t + Dn \quad\quad \ldots\ldots(1)$$

(0 $\leq$ t $\leq$ $t_1$ and An, Bn, Cn and Dn being coefficient vectors),

$$fn+1(t) = An+1\ t^3 + Bn+1\ t^2 + Cn+1\ t + Dn+1 \quad \ldots\ldots(2)$$

(0 $\leq$ t $\leq$ t2 and An+1, Bn+1, Cn+1 and Dn+1 being coefficient vectors),

the first order differentials are:

$$fn^{(1)}(t) = 3An\ t^2 + 2Bn\ t + Cn$$

$$fn+1^{(1)}(t) = 3An+1\ t^2 + 2Bn+1\ t + Cn+1$$

and the second order differentials are:

$$fn^{(2)}(t) = 6An\ t + 2Bn$$

$$fn+1^{(2)}(t) = 6An+1\ t + 2Bn+1.$$

And, the following equation is established:

$$fn(t_1) = fn+1(0),$$

namely,

$$Ant_1^3 + Bnt_1^2 + Cnt_1 + Dn = Dn+1 \quad\quad \ldots\ldots(3)$$

$$fn^{(1)}(t_1) = fn+1^{(1)}(0),$$

namely,

$$3Ant_1^2 + 2Bnt_1 + Cn = Cn+1 \quad\quad \ldots\ldots(4)$$

$$fn^{(2)}(t_1) = fn+1^{(2)}(0),$$

namely,

$$6Ant_1 + 2Bn = 2Bn+1 \quad\quad \ldots\ldots(5)$$

Further, since

$$Pn+2 = fn+1(t_2)$$
$$= 3An+1 \ t_2^{\ 2} + 2Bn+1 \ t_2 + Cn+1 \qquad \ldots\ldots(6)$$

An+1, Bn+1, Cn+1 and Dn+1 are determined if fn(t), Pn+2 and $t_2$ are given from the conditions of equations (3) through (6). fn+1(t) is thus determined.

There has been known a method for substituting $t_2$ with 1 or using the length of chord between the two adjacent points. Accordingly, provided that the first cubic curve bridging from P0 to P1 is determined, the subsequent curves are automatically determined by giving sequence of points.

In this manner, spline curves are sequentially determined based upon the given sequence of points if the cubic curve from P0 to P1 is determined. Stated in another way, the spline curve cannot be determined if the first cubic curve from the P0 to P1 is not determinative.


Disclosure of the Invention

An object of the invention is to resolve the above-noted problems and to provide a spline interpolation method in which a smoothened spline curve is obtained from a small number of points.

In order to resolve the above problems, there is provided, according to one aspect of the invention, a spline interpolation method for interpolating a curve in a numerical control apparatus, said method comprising the steps of:

with a spline curve that is represented with a cubic expression;

determining coefficients of the cubic expression based upon first two points and two end point conditions; and

specifying the spline curve and performing interpolation.

According to a second aspect of the invention, there is provided a spline interpolation method for interpolating a curve in a numerical control apparatus, said method comprising the steps of:

with a spline curve that is represented with a cubic expression;

determining coefficients of the cubic expression based upon first three points and one end point condition; and

specifying the spline curve and performing interpolation.

Furthermore, according to a third aspect of the invention, there is provided a spline interpolation method for interpolating a curve in a numerical control apparatus, said method comprising the steps of:

with a spline curve that is represented with a cubic expression;

determining coefficients of the cubic expression based upon first four given points; and

specifying the spline curve and performing interpolation.

The numerical control apparatus sequentially reads an instruction tape and performs a machining operation while interpolating the curve. Therefore, a large number of points cannot be given at the same time.

According to the present invention, with a spline curve that is represented by a cubic expression, four coefficients of the cubic expression with respect to the region between the first two points are determined based either upon the first two points and two end point conditions, or upon the first three points and one end point condition, or upon the first four points, to thereby perform interpolation. Cubic equations for the rest of the sequence of points are sequentially determined, whereupon interpolation of a region between the current position and the subsequent point is sequentially carried out.

Brief Description of the Drawings

Fig. 1 is a diagram showing a curve to be interpolated;

Fig. 2 is a flow chart illustrating a first embodiment;

Fig. 3 is a flow chart illustrating a second embodiment;

Fig. 4 is a flow chart illustrating a third embodiment; and

Fig. 5 is a block diagram showing a hardware for practicing the present invention.

Best Mode for Carrying Out the Invention

One embodiment of the present invention will be described with reference to the accompanying drawings.

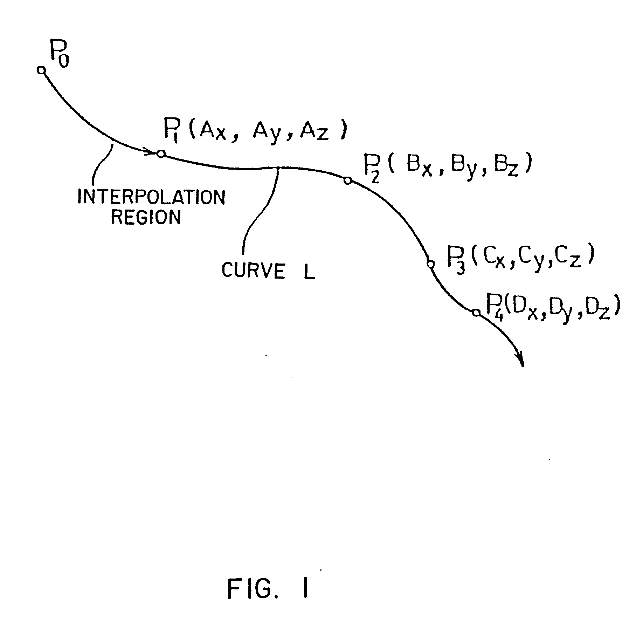

In Fig. 1, there is indicated a curve L to be interpolated, where a point P0 is the current position and points P1, P2 and P3 have been given.

Instructions to a numerical control apparatus include:

G---;    (spline interpolation mode)

Ax  Ay  Az ;    (point P1)

Bx  By  Bz ;    (point P2)

Cx  Cy  Cz ;    (point P3)

Dx  Dy  Dz ;    (point P4)

-- -- -- -- -- --

G--- ; (spline interpolation cancellation).

The spline interpolation is being carried out from the occurrence of the spline interpolation instruction until the occurrence of the spline interpolation cancellation instruction. It goes without saying that the G code for the spline interpolation mode instruction is one and the G code

(1) The curve f(t) passes through the point P0.

(2) The curve f(t) passes through the point P1.

(3) Two conditions are selected from the following three end point conditions which are:

(a) A third order differential of the curve f(t) at the point P0 is zero (0). Alternatively, the third order differential is instructed by a program.

(b) A second order differential of the curve f(t) at the point P0 is zero (0). Alternatively, the second order differential is instructed by a program.

(c) There is given a first order differential (tangential line) at the point P0 of the curve f(t). Three methods exist for giving the first order differential.

(1) To give by a program in the form of, for example, (i, j, k).

(2) To obtain a differential at the point P0.

(3) To set a direction toward the point P1 from the point P0 as the first differential.

Selection of either one of the above methods and the determination of the first order differential (tangential line) at the point P0 are made depending upon the nature of the curve for interpolation. Advantages and disadvantages coexist depending upon the individual curves.

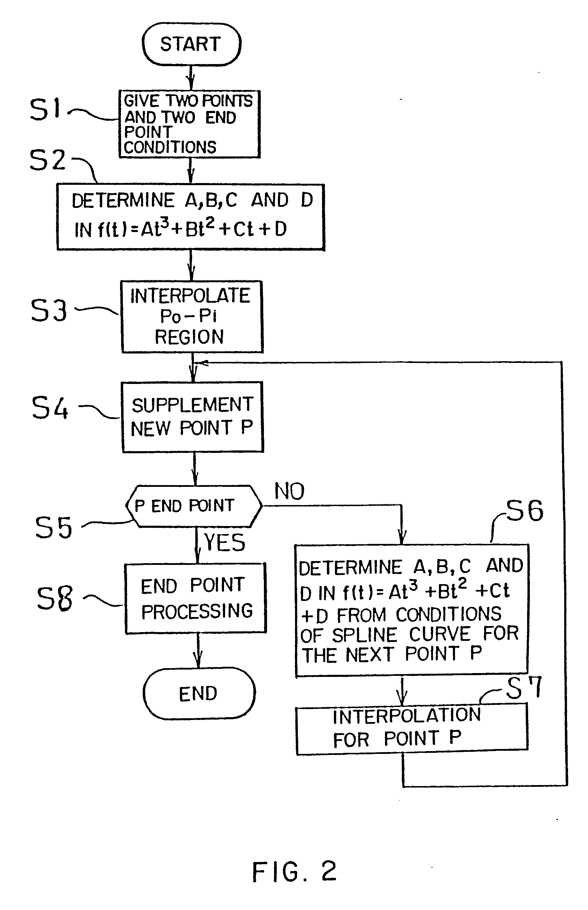

A flow chart for this embodiment is shown in Fig. 2. Sequence of processings will be described with reference to

or the spline interpolation cancellation instruction is quite another.

Next, assuming that the spline curve is the one represented by a cubic expression, it can be written as

$$f(t) = At^3 + Bt^2 + Ct + D$$

where t is variable between the point P0 to the point P1 in the range of $0 \leq t \leq t_1$. It is to be noted that there has been known a method for substituting t2 with 1 or determining according to the length of a chord.

From these points and end point conditions, coefficients of the cubic expression and the curve for the region between P0 and P1 are determined. Then, that region is interpolated and pulses are distributed. The determinations of the subsequent spline curves are accomplished as described in the Background Art section.

The following are the methods for specifying the first cubic curve f(t). The method for specifying the curve f(t) will be described in detail by way of the following embodiments.

[First Embodiment]

In this embodiment, the curve f(t) is determined based upon two points and two end point conditions. Firstly, it is assumed that the curve f(t) complies with the following conditions.

[Second Embodiment]

In this embodiment, the curve f(t) is specified based upon three points and one end point condition. Firstly, it is assumed that the curve f(t) complies with the following conditions.

(1) The curve f(t) passes through the point P0.

(2) The curve f(t) passes through the point P1.

(3) The curve f(t) passes through the point P2.

(4) One condition is selected from the following three end point conditions which are:

(a) A third order differential of the curve f(t) at the point P0 is zero (0). Alternatively, the third order differential is instructed by a program.

(b) A second order differential of the curve f(t) at the point P0 is zero (0). Alternatively, the second order differential is instructed by a program.

(c) There is given a first order differential (tangential line) at the point P0 of the curve f(t). Four methods exist for giving the first order differential.

(1) To give by a program in the form of, for example, (i, j, k).

(2) To obtain a differential at the point P0.

(3) To set a direction toward the point P1 from the point P0 as the first differential.

(4) To obtain from a cubical parabola passing through

the flow chart in Fig. 2.

[S1] Two points and two end point conditions are given. The two end point conditions have been selected in advance depending upon the curve.

[S2] Coefficients of the cubic expression f(t) are determined based upon the above four conditions.

[S3] The region between the points P0 and P1 is interpolated according to the cubic equation of the curve f(t) and pulses are distributed.

[S4] A new point P2 is supplemented.

[S5] If the point P2 is not the end point, the procedure advances to S6, and if it is the end point, the procedure advances to S8.

[S6] From the conditions of the spline curve (which are the conditions represented by the equations (3), (4), (5) and (6) described in the Background Art section), coefficients of the following curbic expression are obtained to give a curve from the point P1 to the point P2.

$$f(t) = At^3 + Bt^2 + Ct + D$$

[S7] Interpolation toward the point P2 is perfomed, whereupon the procedure returns to S4.

[S8] Since the point P2 is the end point, the interpolation is sequentially performed in accordance with the curve which has already been determined. The spline interpolation ends with this.

the points P0, P1 and P2.

Selection of either one of the above methods and the determination of the first order differential (tangential line) at the point P0 are made depending upon the nature of the curve for interpolation. Advantages and disadvantages coexist depending upon the individual curves.

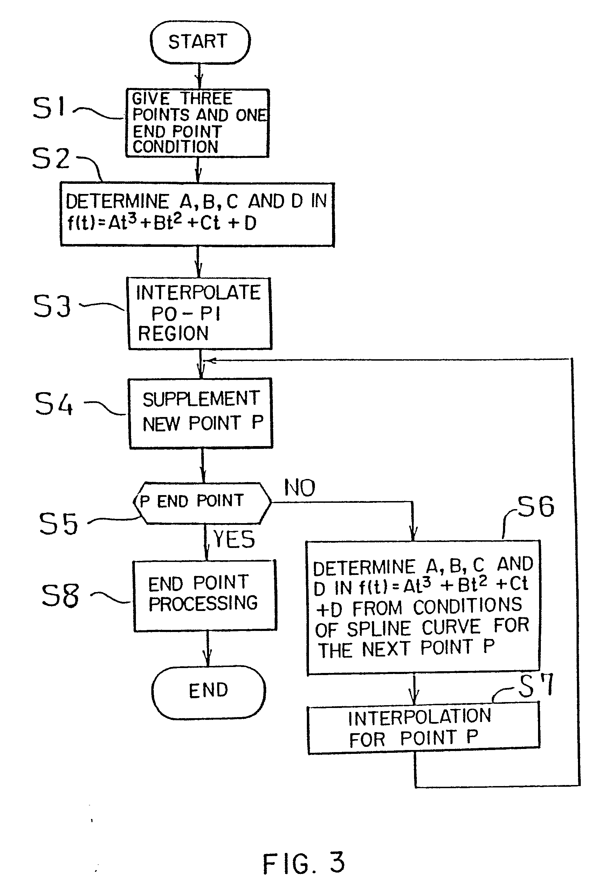

A flow chart for this embodiment is shown in Fig. 3. Sequence of processings will be described with reference to the flow chart in Fig. 3.

[S1] Three points and one end point condition are given. The end point condition has been selected in advance depending upon the curve.

[S2] Coefficients of the cubic expression f(t) are determined based upon the above four conditions.

[S3] The region between the points P0 and P1 is interpolated according to the cubic equation of the curve f(t) and pulses are distributed.

[S4] A new point P2 is supplemented to the point P1 and the end point condition at the point P1.

[S5] If the point P2 is not the end point, the procedure advances to S6, and if it is the end point, the procedure advances to S8.

[S6] From the conditions of the spline curve (which are the conditions represented by the equations (3), (4), (5) and (6) described in the Background Art section), coefficients of the following curbic expression are obtained to give a curve from the point P1 to the point P2.

$$f(t) = At^3 + Bt^2 + Ct + D$$

[S7] Interpolation toward the point P2 is perfomed, whereupon the procedure returns to S4.

[S8] Since the point P2 is the end point, the interpolation is sequentially performed in accordance with the curve which has already been determined. The spline interpolation ends with this, however, since at least the point P1 has been given, the end point is P4 or the point beyond the latter point.

[Third Embodiment]

In this embodiment, the curve f(t) is specified based upon four given points. The four coefficients of the first cubic expression are determined if the four points are given.

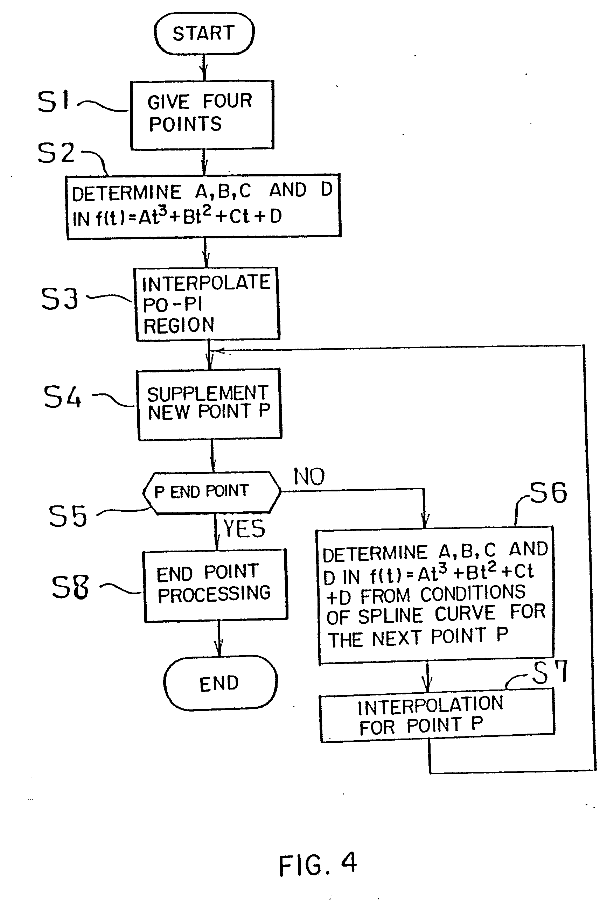

A flow chart for this embodiment is shown in Fig. 4. Sequence of processings will be described with reference to the flow chart in Fig. 4.

[S1] Four points are given.

[S2] Coefficients of the cubic expression f(t) are determined based upon the above four points.

[S3] The region between the points P0 and P1 is interpolated according to the cubic equation of the curve f(t) and pulses are distributed.

[S4] A new point P2 is supplemented to the point P1 and the end point condition at the point P1.

[S5] If the point P2 is not the end point, the procedure advances to S6, and if it is the end point, the procedure advances to S8.

[S6] From the conditions of the spline curve (which are the conditions represented by the equations (3), (4), (5) and (6) described in the Background Art section), coefficients of the following curbic expression are obtained to give a curve from the point P1 to the point P2.

$$f(t) = At^3 + Bt^2 + Ct + D$$

[S7] Interpolation toward the point P2 is perfomed, whereupon the procedure returns to S4.

[S8] Since the point P2 is the end point, the interpolation is sequentially performed in accordance with the curve which has already been determined. The spline interpolation ends with this, however, since at least the point P1 has been given, the end point is P4 or the point beyond the latter point.

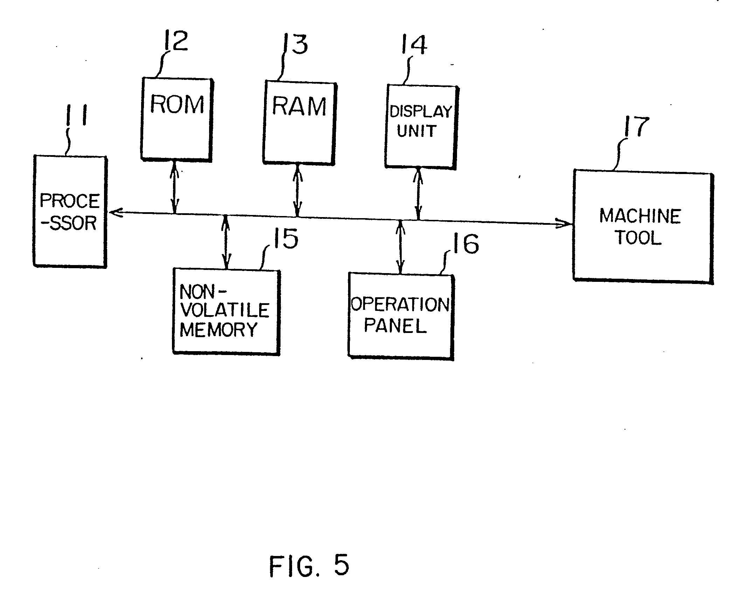

Fig. 5 is a block diagram showing a numerical control apparatus which is used for practicing the present invention. In the figure, a processor is denoted by reference numeral 11. A ROM 12 stores a control program for controlling the numerical control apparatus. There are provided a RAM 13, a display unit 14 and a non-volatile memory in which stored are a machining program, parameters, pitch error correction amount, etc. Numerals 16 and 17 denotes an operation panel and a machine tool, respectively. The interpolation can be performed satisfactorily even in the case where the curve is determined while sequentially receiving data in the numerical control apparatus.

As described, according to the present invention, assuming that the spline curve is represented with a cubic expression, if four points are given at the most, the coefficients of the first cubic expression are determined and thus the interpolation is enabled. Accodingly, while reading machining instructions and distributing the pulses, the machinings can be carried out. A special automatic program producing system or the like are not required and an instruction tape would suffice with the one at a short length.

CLAIMS

1.  A spline interpolation method for interpolating a curve in a numerical control apparatus, said method comprising the steps of:

with a spline curve that is represented with a cubic expression;

determining coefficients of the cubic expression based upon first two points and two end point conditions; and

specifying the spline curve and performing interpolation.

2.  A spline interpolation method according to claim 1, wherein the two end point conditions are selected from the following three: wherein at a start point of the spline curve,

(a) a third order differential being zero (0) or the third order differential being instructed by a program;

(b) a second order differential being zero (0) or the second order differential being instructed by the program; and;

(c) a first order differential.

3.  A spline interpolation method for interpolating a curve in a numerical control apparatus, said method comprising the steps of:

with a spline curve that is represented with a cubic expression;

determining coefficients of the cubic expression based upon first three points and one end point condition; and

specifying the spline curve and performing interpolation.

4. A spline interpolation method according to claim 3, wherein the one end point condition is selected from either one of the following three: wherein at a start point of the spline curve,

(a) a third order differential being zero (0) or the third order differential being instructed by a program;

(b) a second order differential being zero (0) or the second order differential being instructed by the program; and;

(c) a first order differential

5. A spline interpolation method for interpolating a curve in a numerical control apparatus, said method comprising the steps of:

with a spline curve that is represented with a cubic expression;

determining coefficients of the cubic expression based upon first four given points; and

specifying the spline curve and performing interpolation.

$P_0$

$P_1 (A_x, A_y, A_z)$

$P_2 (B_x, B_y, B_z)$

INTERPOLATION
REGION

CURVE L

$P_3 (C_x, C_y, C_z)$

$P_4 (D_x, D_y, D_z)$

FIG. 1

START

S1 — GIVE TWO POINTS AND TWO END POINT CONDITIONS

S2 — DETERMINE A,B,C AND D IN $f(t) = At^3 + Bt^2 + Ct + D$

S3 — INTERPOLATE Po−Pi REGION

S4 — SUPPLEMENT NEW POINT P

S5 — P END POINT

NO

YES

S8 — END POINT PROCESSING

END

S6 — DETERMINE A,B,C AND D IN $f(t) = At^3 + Bt^2 + Ct + D$ FROM CONDITIONS OF SPLINE CURVE FOR THE NEXT POINT P

S7 — INTERPOLATION FOR POINT P

FIG. 2

```
                    ┌──────────┐
                    │  START   │
                    └────┬─────┘
                         ↓
              ┌────────────────────┐
    S1        │ GIVE THREE         │
              │ POINTS AND ONE     │
              │ END POINT          │
              │ CONDITION          │
              └─────────┬──────────┘
                        ↓
         ┌──────────────────────────────┐
    S2   │ DETERMINE A,B,C AND D IN      │
         │ f(t)=At³+Bt²+Ct + D          │
         └──────────────┬───────────────┘
                        ↓
              ┌────────────────────┐
    S3        │ INTERPOLATE        │
              │ PO – PI            │
              │ REGION             │
              └─────────┬──────────┘
                        ↓
              ┌────────────────────┐
    S4        │ SUPPLEMENT         │
              │ NEW POINT P        │
              └─────────┬──────────┘
                        ↓
              ⬡ P END POINT ⬡───── NO ─────────────────┐
    S5                   │                         S6   │
                        YES                             ↓
              ┌────────────────────┐    ┌──────────────────────────┐
    S8        │ END POINT          │    │ DETERMINE A, B, C  AND    │
              │ PROCESSING         │    │ D IN f(t)=At³ + Bt² +Ct   │
              └─────────┬──────────┘    │ +D FROM CONDITIONS        │
                        ↓               │ OF SPLINE CURVE FOR       │
                 ┌──────────┐           │ THE NEXT POINT P          │
                 │   END    │           └────────────┬─────────────┘
                 └──────────┘                        ↓         S7
                                         ┌──────────────────────────┐
                                         │ INTERPOLATION            │
                                         │ FOR  POINT P             │
                                         └──────────────────────────┘
```

$$f(t)=At^3+Bt^2+Ct + D$$

$$f(t)=At^3 + Bt^2 +Ct +D$$

FIG. 3

0319587

START

S1 — GIVE FOUR POINTS

S2 — DETERMINE A,B,C AND D IN $f(t)=At^3+Bt^2+Ct+D$

S3 — INTERPOLATE PO-PI REGION

S4 — SUPPLEMENT NEW POINT P

S5 — P END POINT

NO

YES

S6 — DETERMINE A,B,C AND D IN $f(t)=At^3+Bt^2+Ct+D$ FROM CONDITIONS OF SPLINE CURVE FOR THE NEXT POINT P

S8 — END POINT PROCESSING

S7 — INTERPOLATION FOR POINT P

END

FIG. 4

FIG. 5

## I. CLASSIFICATION OF SUBJECT MATTER (if several classification symbols apply, indicate all) 6

According to International Patent Classification (IPC) or to both National Classification and IPC

Int.Cl⁴     G05B19/415

## II. FIELDS SEARCHED

| Minimum Documentation Searched 7 | |
|---|---|
| Classification System | Classification Symbols |
| IPC | G05B19/415, 19/403 |

| Documentation Searched other than Minimum Documentation to the Extent that such Documents are Included in the Fields Searched 8 | |
|---|---|
| Jitsuyo Shinan Koho | 1971 - 1988 |
| Kokai Jitsuyo Shinan Koho | 1971 - 1988 |

## III. DOCUMENTS CONSIDERED TO BE RELEVANT 9

| Category * | Citation of Document, 11 with indication, where appropriate, of the relevant passages 12 | Relevant to Claim No. 13 |
|---|---|---|
| X, Y | JP, A, 62-2372 (Matsushita Electric Ind. Co., Ltd.) 8 January 1987 (08. 01. 87) Page 2, upper left column, line 20 to lower right column, line 20 (Family: none) | 1-5 |
| Y | JP, A, 55-138112 (Toyo Electric Mfg. Co., Ltd.) 28 October 1980 (28. 10. 80) Page 2, upper left column, line 20 to page 3, lower right column, line 18 (Family: none) | 3-5 |

* Special categories of cited documents: 10

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance: the claimed invention cannot be considered novel or cannot be considered to involve an inventive step

"Y" document of particular relevance: the claimed invention cannot be considered to involve an inventive step when the document is combined with one or more other such documents, such combination being obvious to a person skilled in the art

"&" document member of the same patent family

## IV. CERTIFICATION

| Date of the Actual Completion of the International Search | Date of Mailing of this International Search Report |
|---|---|
| July 23, 1988 (23. 07. 88) | August 8, 1988 (08. 08. 88) |
| International Searching Authority | Signature of Authorized Officer |
| Japanese Patent Office | |

Form PCT/ISA/210 (second sheet) (January 1985)